(19) Europäisches Patentamt / European Patent Office / Office européen des brevets

(11) **EP 3 983 338 B1**

(12) **EUROPÄISCHE PATENTSCHRIFT**

(45) Veröffentlichungstag und Bekanntmachung des Hinweises auf die Patenterteilung:
**06.08.2025  Patentblatt 2025/32**

(21) Anmeldenummer: **19730744.0**

(22) Anmeldetag: **11.06.2019**

(51) Internationale Patentklassifikation (IPC):
**C01B 33/035** (2006.01)

(52) Gemeinsame Patentklassifikation (CPC):
**C01B 33/035**

(86) Internationale Anmeldenummer:
**PCT/EP2019/065165**

(87) Internationale Veröffentlichungsnummer:
**WO 2020/249188 (17.12.2020 Gazette 2020/51)**

(54) **VERFAHREN ZUR HERSTELLUNG VON POLYKRISTALLINEM SILICIUM**

METHOD FOR PRODUCING POLYCRYSTALLINE SILICON

PROCÉDÉ DE PRODUCTION D'UN SILICIUM POLYCRISTALLIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.04.2022  Patentblatt 2022/16**

(73) Patentinhaber: **Wacker Chemie AG**
**81671 München (DE)**

(72) Erfinder:
• **WENZEIS, Markus**
**84329 Wurmannsquick (DE)**
• **FILAR, Piotr**
**84533 Marktl (DE)**
• **SCHRÖCK, Thomas**
**84556 Kastl (DE)**

(74) Vertreter: **Belz, Ferdinand et al**
**Wacker Chemie AG**
**Gisela-Stein-Straße 1**
**81671 München (DE)**

(56) Entgegenhaltungen:
EP-A1- 2 662 335    EP-A2- 1 992 593
WO-A1-2015/014590    US-A1- 2012 322 175

## Beschreibung

Die Erfindung betrifft ein Verfahren zur Herstellung von polykristallinem Silicium, wobei während des Verfahrens die Morphologie des Siliciums anhand einer Kennzahl *M* bestimmt wird und das Verfahren derart gesteuert wird, dass *M* für die Herstellung von polykristallinem Silicium des

- Typs B einen Wert von 1 bis 3 annimmt
- Typs C einen Wert von 1 bis 3 annimmt
- Typs D einen Wert von 3 bis 5 annimmt.

Polykristallines Silicium (Polysilicium) dient als Ausgangsmaterial bei der Herstellung von einkristallinem (monokristallinem) Silicium, beispielsweise mittels Tiegelziehen (Czochralski- oder CZ-Verfahren) oder mittels Zonenschmelzen (Floatzone-Verfahren). Einkristallines Silicium wird in der Halbleiterindustrie zur Fertigung von elektronischen Bauelementen (Chips) verwendet.

Ferner wird Polysilicium zur Herstellung von multikristallinem Silicium, beispielsweise mittels Blockgussverfahren, benötigt. Das in Form eines Blocks erhaltene multikristalline Silicium kann zur Fertigung von Solarzellen eingesetzt werden.

Polysilicium kann durch das Siemens-Verfahren - ein chemischer Gasphasenabscheidungsprozess - gewonnen werden. Dabei werden in einem glockenförmigen Reaktor (Siemens-Reaktor) Trägerkörper (üblicherweise aus Polysilicium) durch direkten Stromdurchgang erhitzt und ein Reaktionsgas enthaltend eine siliciumhaltige Komponente und Wasserstoff eingeleitet. Die siliciumhaltige Komponente ist in der Regel Monosilan ($SiH_4$) oder ein Halogensilan der allgemeinen Zusammensetzung $SiH_nX_{4-n}$ (n = 0, 1, 2, 3; X = Cl, Br, I). Üblicherweise handelt es sich um ein Chlorsilan oder Chlorsilangemisch, für gewöhnlich um Trichlorsilan ($SiHCl_3$, TCS). Überwiegend wird $SiH_4$ oder TCS im Gemisch mit Wasserstoff eingesetzt. Der Aufbau eines typischen Siemens-Reaktors ist beispielsweise in der EP 2 077 252 A2 oder EP 2 444 373 A1 beschrieben. Der Boden des Reaktors (Bodenplatte) ist generell mit Elektroden versehen, welche die Trägerkörper aufnehmen. Bei den Trägerkörpern handelt es sich für gewöhnlich um Filamentstäbe (Dünnstäbe) aus Silicium. Üblicherweise werden zwei Filamentstäbe mit einer Brücke (aus Silicium) zu einem Stabpaar verbunden, das über die Elektroden einen Stromkreis bildet. Die Oberflächentemperatur der Filamentstäbe beträgt üblicherweise während der Abscheidung mehr als 1000°C. Bei diesen Temperaturen zersetzt sich die siliciumhaltige Komponente des Reaktionsgases und elementares Silicium scheidet sich aus der Gasphase als Polysilicium ab. Dadurch nimmt der Durchmesser der Filamentstäbe und der Brücke zu. Nach dem Erreichen eines vorgegebenen Durchmessers der Stäbe wird die Abscheidung üblicherweise gestoppt und die erhaltenen Polysiliciumstäbe ausgebaut. Nach dem Entfernen der Brücke werden annähernd zylinderförmige Siliciumstäbe erhalten.

Die Morphologie des Polysiliciums bzw. der Polysiliciumstäbe und der aus diesen erzeugten Bruchstücke hat generell einen starken Einfluss auf die Performance bei der Weiterverarbeitung. Grundsätzlich wird die Morphologie eines Polysiliciumstabes von den Parametern des Abscheideprozesses bestimmt (z.B. Stabtemperatur, Silan- und/oder Chlorsilankonzentration, spezifischer Durchfluss). In Abhängigkeit der Parameter können sich ausgeprägte Grenzflächen bis hin zu Löchern und Gräben formieren. Diese verteilen sich in der Regel nicht homogen im Inneren des Stabes. Vielmehr können sich durch Variation der Parameter Polysiliciumstäbe mit verschiedenen (meist konzentrischen) Morphologiebereichen ausbilden wie dies beispielsweise in der EP 2 662 335 A1 beschrieben ist. Die Abhängigkeit der Morphologie von der Stabtemperatur kommt z.B. in der US 2012/0322175 A1 zum Ausdruck. Hier ist ein Verfahren zur Kontrolle der Oberflächentemperatur durch eine Widerstandsmessung bei zumindest einem Polysiliciumstab während der Abscheidung beschrieben. Das Verfahren erlaubt jedoch keine Rückschlüsse über die Morphologie des Siliciums, vielmehr setzt es eine gleichbleibende Morphologie voraus.

US 2008/0286550 A1 und US 2013/0295408 A beschreiben ein Verfahren zur Herstellung von Polysiliciumstäben, wobei die Abscheidung durch Steuerung der typischen Verfahrensparameter so geführt wird, dass die Polysiliciumstäbe im radialen Querschnitt des Stabes mindestens drei verschiedene Bereiche mit unterschiedlichen Mikrostrukturen besitzen.

US 2018/0065858 A1 beschreibt einen Reaktor zur Herstellung von Polysilicium, wobei der Reaktor ein Schauglas aufweist, vor welchem Messgeräte angeordnet sind. Auf die Glasfläche des Schauglases ist zur Vermeidung von Ablagerungen ein Spülgasstrom gerichtet.

Die Morphologie von Polysilicium kann von kompakt und glatt bis hin zu sehr porös und zerklüftet variieren. Kompaktes Polysilicium ist im Wesentlichen frei von Rissen, Poren, Fugen und Klüften. Die Rohdichte derartigen Polysiliciums kann mit der Reindichte von Silicium gleichgesetzt werden oder entspricht dieser zumindest in guter Näherung. Die Reindichte von Silicium beträgt 2,329 g/cm$^3$.

Eine poröse und zerklüftete Morphologie hat insbesondere negative Auswirkungen auf das Kristallisationsverhalten von Polysilicium. Besonders stark zeigt sich dies beim CZ-Verfahren zur Herstellung von einkristallinem Silicium. Hier führt der Einsatz von zerklüftetem und porösem Polysilicium zu wirtschaftlich inakzeptablen Ausbeuten. Generell führt beim CZ-Verfahren besonders kompaktes Polysilicium zu deutlich höheren Ausbeuten. Allerdings ist die Erzeugung von kompaktem Polysilicium für gewöhnlich teurer, da ein langsamerer Abscheideprozess erforderlich ist. Ferner setzen nicht alle Anwendungen den Einsatz von besonders kompaktem Polysilicium voraus. Beispielsweise sind die Anforderungen an die Morphologie bei der Herstellung von multikristallinem Silicium nach dem Blockgussverfahren deutlich geringer. Generell erreicht ein Kristallisationsverfahren oder eine bestimmte Ausprägung eines solchen Verfahrens ein wirtschaftliches Optimum, wenn als Ausgangsmaterial Polysilicium eingesetzt wird, dessen Morphologie einen Grenzwert nicht übersteigt.

Entsprechend wird Polysilicium neben der Reinheit und der Bruchgröße auch nach seiner Morphologie unterschieden und klassifiziert. Da unter dem Begriff Morphologie verschiedene Parameter wie beispielsweise Porosität (Summe aus geschlossener und offener Porosität), spezifische Oberfläche, Rauheit, Glanz und Farbe zusammengefasst werden können, stellt eine reproduzierbare Bestimmung der Morphologie eine große Herausforderung dar. Eine optische Begutachtung der Polysiliciumstäbe oder -bruchstücke nach der Abscheidung, wie u.a. in der WO 2014/173596 A1 vorgeschlagen, hat den Nachteil, dass sich die Morphologie im Inneren gegebenenfalls deutlich von der Morphologie der Oberfläche unterscheiden kann.

Beispielsweise kann zur Bestimmung der Porosität das Volumen des Prüfobjekts mittels Differenzmethode bestimmt und anschließend die effektive mit der spezifischen Dichte verglichen werden. Im einfachsten Fall wird dabei das Prüfobjekt in einen vollen Wasserbehälter getaucht, wobei das Volumen des übergelaufenen Wassers dem des Prüfobjekts entspricht. Angewendet auf Polysilicium muss ein geeignetes Fluid genutzt werden, um eine Oxidation und Verunreinigung zu vermeiden und die Oberfläche komplett zu benetzen. Insbesondere bei durch das Siemens-Verfahren hergestellten Polysiliciumstäben, die eine Länge zwischen 2 und 4 m aufweisen können, ist dies mit einem erheblichen Aufwand verbunden. Möglichkeiten zur Dichtemessung bei Polysilicium sind beispielsweise in der WO 2009/047107 A2 beschrieben. Grundsätzlich ist bei einer nachträglichen Betrachtung der Morphologie von Nachteil, dass es für eine Beeinflussung des Abscheidungsprozesses und damit zu einer Steuerung der Morphologie zu spät ist.

Der Erfindung lag die Aufgabe zugrunde, ein Verfahren zur Bestimmung der Morphologie von Polysilicium während der Abscheidung bereitzustellen, um die Herstellung und Verarbeitung des Polysiliciums effizienter zu gestalten.

Diese Aufgabe wird gelöst durch ein Verfahren zur Herstellung von polykristallinem Silicium, umfassend Einleiten eines Reaktionsgases, das neben Wasserstoff Silan und/oder zumindest ein Halogensilan enthält, in einen Reaktionsraum eines Gasphasenabscheidungsreaktors, wobei der Reaktionsraum mindestens einen erhitzten Filamentstab umfasst, auf welchem durch Abscheidung Silicium unter Bildung eines polykristallinen Siliciumstabs abgeschieden wird, wobei zur Bestimmung der Morphologie des Siliciumstabs von dessen Oberfläche während der Abscheidung

- zumindest ein Thermographiebild, umfassend eine Messfläche $A_{max}$, erzeugt wird,
- mittels Bildbearbeitung eine Segmentierung der Messfläche $A_{max}$ in einen ersten und in einen zweiten Oberflächenanteil durchgeführt wird, wobei der erste Oberflächenanteil $A_t$ einer gegenüber lokalen Temperaturmittelwerten höheren Temperatur $T_t$ entspricht, und der zweite Oberflächenanteil $A_p$ einer gegenüber lokalen Temperaturmittelwerten niedrigeren Temperatur $T_p$ entspricht, und
- eine Morphologiekennzahl $M$ bestimmt wird nach

$$M = \left(T_t - T_p\right) * \frac{(A_t + A_p)}{A_{max}} * \frac{A_t}{(A_t + A_p)}, \qquad \text{(Formel I)},$$

wobei die Abscheidung durch Variation zumindest eines Parameters, ausgewählt aus der Gruppe mit $U$, $I$, Oberflächentemperatur $T_{OF}$, Reaktionsgaszusammensetzung und Volumenstrom, dabei derart gesteuert wird, dass $M$ für die Herstellung von polykristallinem Silicium

- eines Typs B einen Wert von 0,1 bis 1,
- eines Typs C einen Wert von 1 bis 3 oder
- eines Typs D einen Wert von 3 bis 5 hat,

wobei $U$ in einem Bereich von 50 und 500 V liegt, $I$ in einem Bereich von 500 und 4500 A liegt, $T_{OF}$ in einem Bereich von 950 bis 1200°C liegt, der Volumenstrom in einem Bereich von 1500 und 9000 m³/h und das Reaktionsgas vor Eintritt in den Reaktor Wasserstoff in einem Anteil von 50 bis 90% enthält.

Wie eingangs bereits beschrieben kann sich in Abhängigkeit der Abscheidungsparameter Polysilicium mit unterschiedlicher Morphologie ausbilden, wobei auch innerhalb desselben Polysiliciumstabs, insbesondere in radialer Richtung seiner Querschnittsfläche, Bereiche verschiedener Morphologie auftreten können, die durch Grenzflächen voneinander getrennt sind. Unter Morphologie soll hier insbesondere die Zerklüftetheit des Polysiliciums verstanden werden, die sich aus der Häufigkeit und Anordnung von Löchern, Poren und Gräben ergibt. Die Morphologie kann auch als Gesamtporosität des Polysiliciums verstanden werden, die sich zusammensetzt aus der Summe aller Hohlräume, die untereinander und mit der Umgebung in Verbindung stehen und den nicht miteinander verbundenen Hohlräumen. Die Gesamtporosität, d.h. der Anteil des Gesamtporenvolumens (offene und geschlossene Poren) am Gesamtvolumen des Polysiliciums kann gemäß DIN-EN 1936 bestimmt werden.

Bei der Abscheidung zeigt sich die Bildung von Poren und Gräben anhand einer Popcorn-artigen Oberflächenstruktur. Im Profil betrachtet handelt es sich bei einer Popcorn-Oberfläche um eine Ansammlung von Erhebungen (Bergen) und Gräben (Tälern). Die Erhebungen und die Gräben unterscheiden sich hinsichtlich ihrer Temperatur während der Abscheidung. Üblicherweise ist gerade dieser Umstand problematisch bei der Bestimmung einer Oberflächentemperatur $T_{OF}$ der Siliciumstäbe, da optimale Messergebnisse nur auf einer ebenen Oberfläche erzielt werden können. Es wurde allerdings erkannt, dass gerade die Temperaturunterschiede zwischen Gräben und Erhebungen auf der Siliciumoberfläche Rückschlüsse auf die Morphologie der Stäbe während der Abscheidung ermöglichen.

Beim erfindungsgemäßen Verfahren wird die Morphologie unmittelbar während der Aschscheidung durch Aufnahme zumindest eines Thermographiebildes bestimmt, wobei mittels Bildbearbeitung Oberflächenbereiche erhöhter Temperatur (Gräben) von Oberflächenbereichen erniedrigter Temperatur separiert werden. Gemäß der Formel I lässt sich dann die Morphologiekennzahl $M$ berechnen.

Eine in der Regel aufwändige und zumeist ungenaue optische Analyse der Polysiliciumstäbe im Ganzen oder in Form von Bruchstücken nach der Abscheidung ist nicht erforderlich. Da die Thermographiebilder zudem ohnehin zur Bestimmung der Oberflächentemperatur $T_{OF}$ erzeugt werden oder zumindest mit demselben Gerät, insbesondere Pyrometer, erzeugt werden können, ist der apparative Aufwand sehr gering. Die Bestimmung von $M$ kann also ohne großen Aufwand in ein bestehendes System zur Prozesssteuerung eingebunden werden. Die Verwendung der Morphologiekennzahl $M$ zur Prozesssteuerung bietet erhebliches Potenzial zur Qualitätssicherung und Maximierung der Produktivität. Insbesondere lässt sich durch eine permanente Überwachung der Morphologie und eine Prozesssteuerung in Abhängigkeit der Morphologie Polysilicium exakt nach Kundenwunsch herstellen.

Bei $M$ handelt es sich um eine dimensionslose Kennzahl, deren Wert umso größer ist, je zerklüfteter/poröser ein Polysiliciumstab ist. Beispielsweise weisen Polysiliciumstäbe, für die $M$ größer als 3 ist, einen erheblichen Anteil an Popcorn auf. Hat $M$ einen Wert von Null, handelt es sich um Stäbe mit einer sehr glatten Oberfläche, also sehr kompakt abgeschiedenes Polysilicium.

Für eine Herstellung von beispielsweise Typ A Polysilicium kann die Steuerung der Abscheidung derart erfolgen, dass $M$ einen Wert von 0 bis 0,1 aufweist. Typ A ist in der Regel sehr kompakt und für die Produktion von Halbleitern bestimmt. Insbesondere für das CZ-Verfahren mit dem Ziel der Maximierung einer versatzfreien Ausbeute.

Für die Herstellung von Typ B Polysilicium erfolgt die Steuerung derart, dass $M$ einen Wert von 0,1 bis 1 aufweist. Typ B weist in der Regel eine mittlere Kompaktheit auf und wird insbesondere für kostenoptimierte robuste Halbleiteranwendungen und anspruchsvolle Solaranwendungen mit monokristallinem Silicium verwendet (CZ-Verfahren).

Für die Herstellung von Typ C Polysilicium, das insbesondere für robuste Solaranwendungen mit monokristallinem Siliciumbenötigt wird, erfolgt die Steuerung derart, dass $M$ einen Wert von 1 bis 3 aufweist. Typ C ist weniger kompakt als Typ B, preiswerter und besonders geeignet für Nachchargier-Prozesse beim CZ-Verfahren.

Für die Herstellung von Typ D Polysilicium erfolgt die Steuerung derart, dass $M$ einen Wert von 3 bis 5 aufweist. Typ D weist einen hohen Anteil an Popcorn auf. Es hat eine relativ zerklüftete Oberfläche und eine hohe Porosität. Es wird insbesondere zur Herstellung von multikristallinem Silicium für Solaranwendungen mittels gerichteter Erstarrung oder Blockgießen eingesetzt.

Vorzugsweise wird $M$ während der Abscheidung im Wesentlichen konstant gehalten. Unter "im Wesentlichen" soll insbesondere verstanden werden, dass temporäre Abweichungen von plus/minus 0,1 von einem Sollwert für $M$ auftreten können. Gegebenenfalls kann die Abweichung auch bei plus/minus 0,2 liegen.

Die Bestimmung der Kennzahl $M$ kann kontinuierlich während der gesamten Dauer der Abscheidung oder diskontinuierlich zu verschiedenen Zeitpunkten, vorzugsweise in gleichen Zeitintervallen, der Abscheidung erfolgen. Vorzugsweise erfolgt die Bestimmung von $M$ kontinuierlich, um eine besonders präzise Steuerung der Abscheidung zu gewährleisten.

Des Weiteren kann die Bestimmung von $M$ diskretisiert in einem Zeitintervall erfolgen, wobei das Zeitintervall insbesondere einem vorgegebenen Zuwachs des Durchmessers des Siliciumstabs entsprechen kann. Auf diese Weise kann eine Aussage über die Morphologie eines in einem bestimmten Zeitintervall aufgewachsenen Bereichs (konzentrischer Bereich) des Siliciumstabs getroffen werden. Für die Berechnung von $M$ in einem bestimmten Zeitintervall wird das entsprechende zeitliche Intergral von $M$ gebildet.

Vorzugsweise werden zur Bestimmung von $M$ mindestens zwei Thermographiebilder von demselben Siliciumstab, insbesondere an unterschiedlichen Positionen, erzeugt. Alternativ oder zusätzlich dazu können auch ein oder mehrere Thermographiebilder jeweils von unterschiedlichen Siliciumstäben erzeugt werden. Die Morphologiekennzahl $M$ kann dann als Mittelwert aus den erhaltenen Einzelwerten gebildet werden.

Die Erzeugung des Thermographiebildes erfolgt vorzugsweise mit einer Thermographiekamera (Strahlungspyrometer), insbesondere von außerhalb des Reaktors durch ein Sichtfenster. Es kann auch vorgesehen sein, ein Video zu erzeugen, wobei dann vorzugsweise Einzelbilder des Videos einer Bildbearbeitung unterzogen werden. Die Bildbearbeitung kann insbesondere durch eine Software erfolgen, die vorzugsweise in das System eines Prozessleitstands integriert ist.

Es können auch zwei oder mehr Thermographiekameras, die unterschiedlich um den Reaktor positioniert sein können, verwendet werden. Vorzugsweise sind die Thermographiekameras nebeneinander (in Umfangsrichtung des Reaktors) vor jeweils einem Sichtfenster positioniert. Sie können auch nebeneinander oder übereinander vor einem Sichtfenster positioniert sein. Die Kameras können sich auf unterschiedlicher Höhe befinden. Üblicherweise erfolgt die Erzeugung des Thermographiebildes an einem Siliciumstab, der dem Sichtfenster am nächsten ist. Generell ist es nicht wesentlich, ob das Thermographiebild z.B. auf Höhe der Stabmitte (Mitte zwischen Brücke und Elektrode) oder auf Höhe des oberen oder unteren Stabdrittels erfolgt. Vorzugsweise wird das Thermographiebild von der Stabmitte erzeugt.

Da auch $T_{OF}$ mit der Thermographiekamera ermittelt werden kann, kann die Bestimmung beider Werte an demselben Siliciumstab bzw. denselben Siliciumstäben erfolgen. Bezüglich der Bestimmung von $T_{OF}$ kann auch auf die noch nicht veröffentlichte PCT/EP2017/081551 verwiesen werden.

$T_{OF}$ ist generell eine wichtige Einflussgröße, die während der Abscheidung typischerweise kontrolliert und durch Variation des Stromdurchgangs angepasst werden kann. Grundsätzlich nimmt der Wärmefluss, der die Siliciumstäbe verlässt, mit der Abscheidezeit zu, da der Durchmesser und damit die Oberfläche der Stäbe wächst. Während der Abscheidung ist also üblicherweise eine Anpassung der Stromstärke erforderlich.

Die Bestimmung des Durchmessers erfolgt vorzugsweise von außerhalb des Reaktors durch ein Sichtfenster, insbesondere mittels einer Kamera (z.B. Digital-/CCD-Kamera). Bezüglich der Positionierung der Kamera und der Methodik zum Ermitteln des Durchmessers kann auf die obigen Ausführungen und auf WO 2019/110091 A1 verwiesen werden. Grundsätzlich kann die Durchmesserbestimmung auch anhand eines oder mehrere Thermographiebilder erfolgen.

Generell ist auch die Anzahl der im Gasphasenabscheidungsreaktor angeordneten Siliciumstäbe bzw. Siliciumstabpaare für die Ausführung des erfindungsgemäßen Verfahrens unerheblich. Vorzugsweise handelt es sich bei dem Gasphasenabscheidungsreaktor um einen Siemens-Reaktor wie er einleitend und beispielsweise in der EP 2 662 335 A1 beschrieben ist. Entsprechend handelt es sich bei dem Filamentstab vorzugsweise um zwei Dünnstäbe aus Silicium, die über eine Brücke aus Silicium zu einem Stabpaar verbunden sind, wobei die beiden freien Enden des Stabpaares mit Elektroden am Reaktorboden verbunden sind. Typische Beispiele für die Anzahl von Siliciumstäben in einem Reaktor sind 36 (18 Stabpaare), 48 (24 Stabpaare), 54 (27 Stabpaare), 72 (36 Stabpaare) oder 96 (48 Stabpaare). Die Siliciumstäbe können zu jedem Zeitpunkt der Abscheidung in guter Näherung als zylinderförmig beschrieben werden. Dies ist insbesondere unabhängig davon, ob die Dünnstäbe zylindrisch oder bspw. quadratisch ausgebildet sind.

Die Messfläche $A_{max}$, innerhalb welcher $M$ bestimmt wird, weist vorzugsweise eine Größe von 10 bis 300 $cm^2$, bevorzugt 30 bis 200 $cm^2$, besonders bevorzugt 50 bis 150 $cm^2$, auf. $A_{max}$ kann insbesondere einem Ausschnitt des erzeugten Thermographiebildes entsprechen. $A_{max}$ kann aber auch dem gesamten Thermographiebild entsprechen. Die sich mit steigendem Durchmesser des Siliciumstabes veränderte Krümmung kann bei der Festlegung von $A_{max}$ unberücksichtigt bleiben.

Die Segmentierung der Messfläche $A_{max}$ in einen ersten Oberflächenanteil $A_t$ und in einen zweiten Oberflächenanteil $A_p$ erfolgt vorzugsweise mit einem Rangordnungsfilter, insbesondere Medianfilter. Beispielsweise kann es sich um einen 30*30 Pixel Medianfilter handeln (die Größe der Umgebung des betrachteten Pixels beträgt 30*30 Pixel). Auch andere Mittelwertfilter können angewendet werden.

Durch die Division der der beiden Bilder (Originalbild dividiert durch das geglättete Bild) erhält man die lokal bezogene Abweichung zum Mittelwert. Anschließend erfolgt eine Separierung nach kleiner 0, wobei die Flächenanteile des Popcorns (Erhebungen) erhalten werden. Gegebenenfalls können mit Standard-Bildverarbeitungsalgorithmen (bspw. mit den Befehlen aus der Bibliothek der Fa. National Instruments: *Dilate, Erode, Fill Holes, Separate Objects*) kleinere Strukturen gelöscht und "Löcher" geschlossen werden. Bei den Löchern handelt es sich generell um Artefakte aus der Bildverarbeitung. Mit der Maske werden dann Erhebungen (Popcorn) und Gräben (Täler) getrennt, indem das vom Messgerät generierte Thermographiebild (Temperaturarray) gefiltert bzw. separiert wird. Aus den beiden durch Separierung entstandenen Thermographiebildern (Temperaturarrays) können dann jeweils durch Medianauswertung die Temperaturen $T_t$ und $T_p$ ermittelt werden.

Der erste Oberflächenanteil $A_t$ entspricht dabei der Fläche, die von Gräben (Tälern) eingenommen wird und eine Temperatur $T_t$ aufweist. Der zweite Oberflächenanteil $A_p$ entspricht der Fläche, die von Erhebungen (Bergen) eingenommen wird und eine Temperatur $T_p$ aufweist.

Der Temperaturunterschied zwischen Gräben und Erhebungen auf der Siliciumoberfläche kann typischerweise 30 C betragen. Die Oberflächentemperatur $T_{OF}$ während der Abscheidung liegt in einem Bereich von 950 bis 1200°C.

Die Abscheidung wird durch Variation von zumindest einem Parameter ausgewählt aus der Gruppe mit $U$, $I$, $T_{OF}$, Reaktionsgaszusammensetzung und Volumenstrom, gesteuert.

Bei $I$ (Stabstrom) handelt es sich um die Stromstärke, mit welcher ein Filamentstab/Siliciumstab erhitzt wird (Joule-Erwärmung). Bei $U$ handelt es sich um die Spannung, die zur Erzeugung des Stabstroms zwischen den Enden eines Siliciumstabs oder Filamentstabs anliegt. Die Messung von $U$ und $I$ kann mittels handelsüblicher Messgeräte erfolgen. Der Volumenstrom wird üblicherweise vor Eintritt des Reaktionsgases in den Reaktor gemessen, beispielsweise nach DIN EN 1343. Für gewöhnlich werden $U$, $I$, $T_{OF}$ und der Volumenstrom stets an einem Prozessleitstand angezeigt und ggf. aufgezeichnet. In der Regel geschieht dies durch eine kontinuierliche oder diskontinuierliche Rückkopplung am Prozessleitstand, wobei in Abhängigkeit der ermittelten Morphologiekennzahl $M$ eine Anpassung der Parameter erfolgt, um so den gewünschten Sollwert für $M$ zu erzielen.

Die Spannung $U$ (pro Stabpaar) liegt dabei in einem Bereich von 50 und 500 V, bevorzugt von 55 und 250 V, besonders bevorzugt von 60 und 100 V.

Die Stromstäke $I$ (pro Stabpaar) liegt dabei in einem Bereich von 500 und 4500 A, bevorzugt von 1500 und 4000 A, besonders bevorzugt von 2500 und 3500 A.

Das Reaktionsgas enthält vor Eintritt in den Reaktor Wasserstoff in einem Anteil von 50 bis 90%, bevorzugt von 60 bis 80%. Die Bestimmung der Zusammensetzung des Reaktionsgases kann vor der Zuleitung zum Reaktor über Raman- und Infrarotspektroskopie sowie Gaschromatographie erfolgen.

Der Volumenstrom (messbar nach DIN EN 1343) des Reaktionsgases beträgt 1500 bis 9000 m³/h, bevorzugt 3000 bis 8000 m³/h.

Durch die Steuerung der Abscheidung lässt sich Polysilicium verschiedenster Qualitäten herstellen (z.B. Typ A, B, C und D). Beispielsweise lassen sich auch Siliciumstäbe herstellen, die konzentrische Bereiche unterschiedlicher Morphologie aufweisen. Mit besonderem Vorteil kann der gesamte Abscheidungsprozess den jeweiligen Qualitätsvorgaben angepasst werden und so immer die wirtschaftlichste Fahrweise des Reaktors gewählt werden.

**Fig. 1**  zeigt die Segmentierung eines Thermographiebildes.

**Fig. 2**  zeigt den Verlauf der Morphologiekennzahl $M$ in Abhängigkeit des Durchmessers für zwei Typen von Polysilicium.

**Beispiel 1**

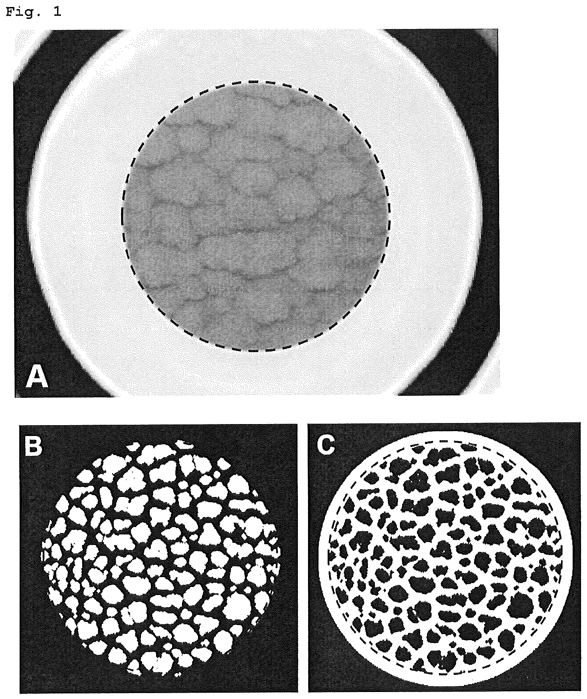

Die Figur 1 zeigt beispielhaft ein Thermographiebild A. Es wurde von einem Siliciumstab in einem Siemens-Reaktor auf etwa halber Höhe zwischen Brücke und Elektrode durch ein Sichtfenster mit einer Infrarotkamera aufgenommen. Der Siliciumstab war in unmittelbarer Nähe des Sichtfensters. Die Aufnahme erfolgte nach einer Abscheidedauer von ca. 90 h. Der Siemens-Reaktor war mit 24 Stabpaaren bestückt, wobei die Filamentstäbe eine Länge von 2,5 m (Länge zwischen Brücke und Elektrode) hatten. Es sollte Polysilicium des Typs C abgeschieden werden. Entsprechend sollte M einen Wert von 1 bis 3 aufweisen. Die Messfläche $A_{max}$ entspricht dem Inneren der gestrichelten Linie.

Die Bilder B und C zeigen das Ergebnis der Segmentierung eines Thermographiebildes. Mittels der Software LabVIEW (Fa. National Instruments) unter Verwendung eines Medianfilters (30*30 Pixel) erfolgte die Segmentierung in den Oberflächenanteil $A_p$ (Bild B, Erhebungen in Weiß innerhalb der gestrichelten Linie, Temperatur $T_p$ = 1027°C) und den Oberflächenanteil $A_t$ (Bild C, Gräben in Weiß innerhalb der gestrichelten Linie, Temperatur $T_t$ = 1033°C, $A_t$ = 20 cm²). Die Messfläche $A_{max}$ betrug 57 cm². Gemäß Formel I betrug $M$ zu diesem Zeitpunkt der Abscheidung 2,1, was innerhalb des Sollwertbereichs für Polysilicium Typ C liegt.

**Beispiel 2:**

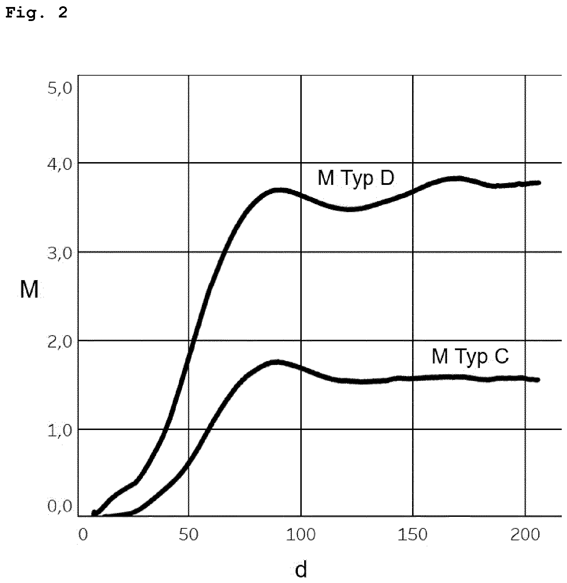

In der Figur 2 ist der Verlauf von $M$ für zwei verschiedene Abscheidungsprozesse, also zwei unterschiedliche Polysilicium-Qualitäten, gegen den Siliciumstabdurchmesser $d$ [mm] aufgetragen. Bei der oberen Kurve handelt es sich um die Herstellung von Typ D. Bei der unteren Kurve handelt es sich um die Herstellung von Typ C. Typ C ist kompakter als Typ D und wird für sensiblere Anwendungen herangezogen. Typ C sollte einen Wert für $M$ von 1 bis 3 aufweisen, während Typ D einen Wert von 3 bis 5 aufweisen sollte. Beide Prozesse wurden in demselben Siemens-Reaktor jedoch mit unterschiedlichen Vorgaben für mindestens einen Parameter aus der Gruppe mit $U$, $I$, $T_{OF}$, Reaktionsgaszusammensetzung und Volumenstrom durchgeführt. Die Bestimmung von $M$ erfolgte kontinuierlich während der gesamten Abscheidedauer. Der Stabdurchmesser wurde an zwei Stäben mit einer Digitalkamera und Bildbearbeitung bestimmt.

Beide Prozesse beginnen mit kompakt abgeschiedenem Polysilicium mit Werten für $M$ nahe bei 0, was insbesondere an den Filamentstäben aus sehr kompaktem Silicium liegt. Bei der Herstellung von Typ D wurde für $M$ schon kurz nach dem Beginn der Abscheidung ein relativ steiler Verlauf gewählt. Das angestrebte Niveau von $M$ bei etwa 3,5 sollte schon bei einem Stabdurchmesser von ca. 90 mm erreicht werden. Der steile Verlauf hin zu einem eher porösen Polysilicium wurde insbesondre durch **eine** Veränderung der Oberflächentemperatur, Gaszusammensetzung und/oder Volumenstrom erreicht. Anschließend wurde $M$ auf einen Wert zwischen 3,5 und 3,9 (durchschnittlich ca. 3,7) eingeregelt.

Auch für die Herstellung von Typ C sollte der Sollwert von etwa 1,5 bei ca. 90 mm erreicht werden. Die Regelung der oben beschriebenen Parameter wurde entsprechend angepasst. Für die restliche Abscheidedauer wurde $M$ konstant bei durchschnittlich 1,6 gehalten.

Anhand des Beispiels wird deutlich, wie komfortabel anhand der Kennzahl $M$ die Abscheidung zur Herstellung verschiedenster Polysilciumtypen gesteuert werden kann.

**Patentansprüche**

1.  Verfahren zur Herstellung von polykristallinem Silicium, umfassend Einleiten eines Reaktionsgases, das neben Wasserstoff Silan und/oder zumindest ein Halogensilan enthält, in einen Reaktionsraum eines Gasphasenabscheidungsreaktors, wobei der Reaktionsraum mindestens einen erhitzten Filamentstab umfasst, auf welchem durch Abscheidung Silicium unter Bildung eines polykristallinen Siliciumstabs abgeschieden wird, wobei zur Bestimmung der Morphologie des Siliciumstabs von dessen Oberfläche während der Abscheidung

    - zumindest ein Thermographiebild, umfassend eine Messfläche $A_{max}$, erzeugt wird,
    - mittels Bildbearbeitung eine Segmentierung der Messfläche $A_{max}$ in einen ersten und in einen zweiten Oberflächenanteil durchgeführt wird, wobei der erste Oberflächenanteil $A_t$ einer gegenüber lokalen Temperaturmittelwerten höheren Temperatur $T_t$ entspricht, und der zweite Oberflächenanteil $A_p$ einer gegenüber lokalen Temperaturmittelwerten niedrigeren Temperatur $T_p$ entspricht, und
    - eine Morphologiekennzahl $M$ bestimmt wird nach

    $$M = \left(T_t - T_p\right) * \frac{(A_t + A_p)}{A_{max}} * \frac{A_t}{(A_t + A_p)}, \qquad \text{(Formel I)},$$

    wobei die Abscheidung durch Variation zumindest eines Parameters, ausgewählt aus der Gruppe mit $U$, $I$, Oberflächentemperatur $T_{OF}$, Reaktionsgaszusammensetzung und Volumenstrom, derart gesteuert wird, dass $M$ für die Herstellung von polykristallinem Silicium
    - eines Typs B einen Wert von 0,1 bis 1,
    - eines Typs C einen Wert von 1 bis 3 oder
    - eines Typs D einen Wert von 3 bis 5 hat,

    wobei $U$ in einem Bereich von 50 und 500 V liegt, $I$ in einem Bereich von 500 und 4500 A liegt, $T_{OF}$ in einem Bereich von 950 bis 1200°C liegt, der Volumenstrom in einem Bereich von 1500 und 9000 m³/h und das Reaktionsgas vor Eintritt in den Reaktor Wasserstoff in einem Anteil von 50 bis 90% enthält.

2.  Verfahren nach Anspruch 1, **dadurch gekennzeichnet, dass** die Kennzahl $M$ während der Abscheidung konstant gehalten wird.

3.  Verfahren nach einem der vorhergehenden Ansprüche, **dadurch gekennzeichnet, dass** die Bestimmung der Kennzahl $M$ kontinuierlich während der gesamten Abscheidung oder diskontinuierlich zu verschiedenen Zeitpunkten der Abscheidung erfolgt.

4.  Verfahren nach einem der vorhergehenden Ansprüche, **dadurch gekennzeichnet, dass** die Bestimmung der Kennzahl $M$ diskretisiert in einem Zeitintervall erfolgt, das vorzugsweise einem vorgegebenen Zuwachs des Durchmessers des Siliciumstabs entspricht.

5.  Verfahren nach einem der vorhergehenden Ansprüche, **dadurch gekennzeichnet, dass** zur Bestimmung von $M$ mindestens zwei Thermographiebilder von demselben Siliciumstab oder von unterschiedlichen Siliciumstäben erzeugt werden.

6.  Verfahren nach einem der vorhergehenden Ansprüche, **dadurch gekennzeichnet, dass** die Segmentierung mit einem Rangordnungsfilter, insbesondere Medianfilter, erfolgt.

7.  Verfahren nach einem der vorhergehenden Ansprüche, **dadurch gekennzeichnet, dass** die Messfläche $A_{max}$ eine Größe von 10 bis 300 cm², bevorzugt 30 bis 200 cm², besonders bevorzugt 50 bis 150 cm², aufweist.

**Claims**

1.  Method for producing polycrystalline silicon comprising introducing a reaction gas, which in addition to hydrogen contains silane and/or at least one halosilane, into a reaction space of a gas phase deposition reactor, wherein the reaction space comprises at least one heated filament rod upon which by deposition silicon is deposited to form a polycrystalline silicon rod, wherein during the deposition, to determine the morphology of the silicon rod,

- at least one thermographic image of the surface of said rod comprising a measurement area $A_{max}$ is generated,
- by image processing a segmentation of the measurement area $A_{max}$ into a first and a second area fraction is performed, wherein the first area fraction $A_t$ corresponds to a relatively high temperature $T_t$ compared to local average temperature values and the second area fraction $A_p$ corresponds to a relatively low temperature $T_p$ compared to local average temperature values, and
- a morphology index $M$ is determined according to

$$M = \left(T_t - T_p\right) * \frac{(A_t + A_p)}{A_{max}} * \frac{A_t}{(A_t + A_p)}, \quad \texttt{(formula I),}$$

wherein through variation of at least one parameter selected from the group comprising $U, I$, surface temperature $T_{OF}$, reaction gas composition and volume flow the deposition is controlled such that $M$ has a value
- of 0.1 to 1 for production of polycrystalline silicon of type B,
- of 1 to 3 for production of polycrystalline silicon of type C or
- of 3 to 5 for production of polycrystalline silicon of type D,

wherein $U$ is in a range from 50 to 500 V, $I$ is in a range from 500 to 4500 A, $T_{OF}$ is in a range from 950°C to 1200°C, the volume flow is in a range from 1500 to 9000 m³/h and the reaction gas contains hydrogen in a proportion of 50% to 90% before entry into the reactor.

2. Method according to Claim 1, **characterized in that** the index $M$ is kept constant during the deposition.

3. Method according to either of the preceding claims, **characterized in that** the determination of the index $M$ is carried out continuously during the entire deposition or discontinuously at various points in time during the deposition.

4. Method according to any of the preceding claims, **characterized in that** the determination of the index $M$ is carried out discretely in a time interval preferably corresponding to a specified growth in the diameter of the silicon rod.

5. Method according to any of the preceding claims, **characterized in that** at least two thermographic images of the same silicon rod or of different silicon rods are generated to determine $M$.

6. Method according to any of the preceding claims, **characterized in that** the segmentation is carried out with a rank filter, in particular a median filter.

7. Method according to any of the preceding claims, **characterized in that** the measurement area $A_{max}$ has a size of 10 to 300 cm², preferably 30 to 200 cm², particularly preferably 50 to 150 cm².

**Revendications**

1. Procédé de préparation de silicium polycristallin, comprenant l'introduction d'un gaz de réaction qui contient, outre de l'hydrogène, du silane et/ou au moins un halogénosilane, dans une chambre de réaction d'un réacteur de séparation en phase gazeuse, la chambre de réaction comprenant au moins un filament chauffé, sur lequel est séparé, par dépôt, du silicium avec formation d'une tige de silicium polycristallin, dans lequel, pour la détermination de la morphologie de la tige de silicium, sur sa surface, pendant le dépôt

- on génère au moins une image de thermographie, comprenant une surface de mesure $A_{max}$,
- on réalisé, au moyen d'un traitement d'image, une segmentation de la surface de mesure $A_{max}$ en une première et une deuxième part de surface, la première part de surface $A_t$ correspondant à une température plus élevée $T_t$ par rapport à des valeurs moyennes de température locale et la deuxième part de surface $A_p$ correspondant à une température plus basse $T_p$ par rapport à des valeurs moyennes de température locale et
- un paramètre de morphologie $M$ est déterminé selon

$$M = \left(T_t - T_p\right) * \frac{(A_t + A_p)}{A_{max}} * \frac{A_t}{(A_t + A_p)}, \quad \text{(Formule I)},$$

le dépôt étant régulé par variation d'au moins un paramètre, choisi dans le groupe constitué par $U, I$, température de surface $T_{oF}$, composition du gaz de réaction et flux volumique, de telle sorte que $M$, pour la production de silicium polycristallin
- d'un type B, présente une valeur de 0,1 à 1,
- d'un type C, présente une valeur de 1 à 3 ou
- d'un type D, présente une valeur de 3 à 5,

$U$ se situant dans une plage de 50 à 500 V, $I$ se situant dans une plage de 500 à 4500 A, $T_{OF}$ se situant dans une plage de 950 à 1200°C, le flux volumique se situant dans une plage de 1500 à 9000 $m^3$/h et le gaz de réaction avant l'entrée dans le réacteur contenant de l'hydrogène en une proportion de 50 à 90%.

**2.** Procédé selon la revendication 1, **caractérisé en ce que** le paramètre $M$ est maintenu constant pendant le dépôt.

**3.** Procédé selon l'une des revendications précédentes, **caractérisé en ce que** la détermination du paramètre $M$ est effectuée en continu pendant tout le dépôt ou de manière discontinue à différents moments du dépôt.

**4.** Procédé selon l'une des revendications précédentes, **caractérisé en ce que** la détermination du paramètre $M$ est effectuée sous forme discrète dans un intervalle de temps qui correspond de préférence à une croissance définie du diamètre de la tige de silicium.

**5.** Procédé selon l'une des revendications précédentes, **caractérisé en ce que** pour la détermination de $M$ au moins deux images de thermographie de la même tige de silicium ou de tiges de silicium différentes sont générées.

**6.** Procédé selon l'une des revendications précédentes, **caractérisé en ce que** la segmentation est effectuée à l'aide d'un filtre de classement, en particulier un filtre médian.

**7.** Procédé selon l'une des revendications précédentes, **caractérisé en ce que** la surface de mesure $A_{max}$ présente une dimension de 10 à 300 $cm^2$, de préférence de 30 à 200 $cm^2$, de manière particulièrement préférée de 50 à 150 $cm^2$.

Fig. 1

Fig. 2

**EP 3 983 338 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2077252 A2
- EP 2444373 A1
- EP 2662335 A1
- US 20120322175 A1
- US 20080286550 A1
- US 20130295408 A
- US 20180065858 A1
- WO 2014173596 A1
- WO 2009047107 A2
- EP 2017081551 W
- WO 2019110091 A1